# FASCICULE DE BREVET EUROPEEN

(11) **EP 3 596 558 B1**
(45) Date de publication et mention de la délivrance du brevet: **31.03.2021**
(21) Numéro de dépôt: 18708214.4
(22) Date de dépôt: 14.02.2018
(51) Int. Cl.: G04G 17/02, B32B 7/06, G04B 39/00, H04B 1/3888, H04M 1/02

(54) **APPAREIL COMPORTANT UNE GLACE OU UN ÉCRAN**
VORRICHTUNG MIT EINEM GLAS ODER EINEM SCHIRM
APPARATUS COMPRISING A GLASS OR A SCREEN

(30) Priorité: 17.03.2017 CH 3282017; 17.07.2017 CH 9292017
(43) Date de publication de la demande: 22.01.2020
(73) Titulaire: FGP Capital SA, 1201 Genève (CH)
(72) Inventeur: CAVALCA, Fabrizio, 1227 Carouge (CH); GRAND, René, 1294 Genthod (CH); FROEHLICHER, Philippe, 1204 Genève (CH)
(74) Mandataire: Cronin, Brian Harold John
(86) Numéro de dépôt international: PCT/IB2018/050902
(87) Numéro de publication internationale: WO 2018/167582

(56) Documents cités:
- WO-A1-2011/112817
- CN-U- 203 966 101
- CN-U- 204 894 644
- US-A1- 2015 183 201
- US-B1- 8 567 596

## Description

La présente invention se rapporte à un appareil comportant une glace ou un écran et agencé pour assurer l'étanchéité et une protection anti-rayure de l'appareil.

La dégradation de l'aspect visuel d'un appareil comportant une glace ou un écran, par exemple une montre, lors du porter est un facteur de perception de qualité essentiel pour le consommateur. Les altérations de la surface des articles proviennent de sollicitations en tout genre, en particulier d'origine mécanique. La glace ou verre de montre est avec le cadran un élément essentiel de l'image de la montre. Sa fragilité, sa résistance à la rayure et sa transparence sont des caractéristiques importantes.

De plus l'étanchéité des appareils, portatifs ou non, comportant des glaces ou des écrans est fondamentale non seulement pour le bon fonctionnement desdits appareils mais encore pour l'image des fabricants pour qui les retours aux services après-vente sont très mal perçus.

Ainsi, une dégradation de l'écran ou d'une glace est très préjudiciable pour l'utilisation voire le bon fonctionnement futur de l'appareil.

Pour faire face à cette double problématique, des solutions visant à rendre incassable ou inrayables des glaces ou des écrans ont été développées.

Des faces de pièces d'horlogerie en polycarbonate hautement transparent sont utilisées pour, par exemple, améliorer la qualité décorative. Dans un cas où un adhésif est utilisé dans une face de pièce d'horlogerie créée par collage d'une pluralité de substrats, en forme de plaque, des bulles d'air entrent dans une couche d'adhérence, une couche de liaison entre les substrats, et diminuent significativement l'aspect esthétique de la pièce d'horlogerie dans son ensemble.

EP2508952 décrit une face de pièce d'horlogerie comprenant un premier substrat lequel comprend au moins 50% en poids d'un polycarbonate, un second substrat lequel comprend au moins 50% en poids d'un polycarbonate et une couche de liaison liant le premier substrat et le second substrat. La couche de liaison est configurée à partir d'une composition adhésive obtenue par irradiation d'une matière de résine acrylique réticulant aux UV.

WO2014003495 décrit un film de protection pour un écran, qui peut être collé dans la position correcte sur un écran à cristaux liquides d'un téléphone mobile. La structure de film de protection pour un écran de téléphone mobile comprend le film de protection, qui a la même dimension que l'écran à cristaux liquides sur le téléphone mobile et dont une surface est revêtue d'un agent adhésif, un papier anti-adhérent inférieur, qui est collé sur le film de protection de telle sorte qu'une surface latérale du papier anti-adhérent inférieur vient en contact étroit avec une surface interne du film de protection. La structure de film de protection comprend en outre un papier anti-adhérent supérieur, qui est collé sur l'autre surface externe du film de protection et des premier et second papiers de fixation, qui sont situés sur une partie d'extrémité ou l'autre partie d'extrémité du papier anti-adhérent supérieur et sont collés et viennent en contact étroit avec le bord d'une extrémité ou de l'autre extrémité du téléphone mobile. Ce film de protection contre les rayures n'apporte aucune protection pour l'étanchéité en cas de casse de l'écran principal.

EP2754739 décrit un composant de vitre de fermeture pour un dispositif électronique tel un téléphone. Le composant de vitre de fermeture comprend un matériau céramique en oxyde d'aluminium présentant des première et seconde surfaces principales, les première et seconde surfaces principales définissant entre elles le composant de vitre de fermeture. Une première partie du composant de vitre de fermeture présente une contrainte résiduelle de compression induite dans celui-ci par recuit sélectif de la première partie de la vitre de fermeture et une seconde partie du composant de vitre de fermeture ne présente pas de contrainte résiduelle de compression induite dans celui-ci. La première partie du composant de vitre de fermeture, où est induite une contrainte résiduelle de compression, présente une contrainte résiduelle de compression plus importante que la seconde partie du composant de vitre de fermeture, où n'est pas induite la contrainte résiduelle de compression. Le matériau d'oxyde d'aluminium cristallin est un matériau d'oxyde d'aluminium substantiellement monocristallin, comme par exemple du saphir.

EP3121002A1 décrit un capot de protection pour une interface utilisateur d'un écran tactile de divertissement solidarisé du dossier d'un siège d'avion. Le capot comprend un élément protecteur extérieur comprenant une surface externe comprenant une couche de verre ultra-mince, le verre ultra-mince comprenant une surface intérieure et une surface extérieure opposée définissant une épaisseur. L'épaisseur est comprise entre 0,02 et 0,15 mm. Un élément intérieur de protection constitué d'un plastique est disposé sur la surface interne du verre ultra-mince. Ce système est une sorte de feuilletage de sécurité évitant que le passager de l'avion ne se blesse en cas de bris de l'écran.

EP2644670 décrit une feuille adhésive comportant une première couche d'adhésive, une couche transparente de résine acrylique et une seconde couche d'adhésive. Selon une exécution, cette feuille adhésive double-face peut être utilisée pour venir coller contre un écran tactile.

WO2008/002772 décrit un article optique comprenant un premier substrat optique rigide, un deuxième substrat optique rigide et un adhésif optique autoporteur se situant entre le premier et le deuxième substrat rigide ceci afin de remplacer une couche antireflet susceptible de générer des bulles d'air. L'adhésif autoporteur comprend un réseau polymère réticulé à base de silicone et un fluide siliconé disposé dans le réseau polymère.

CN204894644 décrit un autocollant de protection en saphir comprenant un autocollant de protection, qui est un boîtier métallique avec une surface fixée à un appareil électronique. Le panneau a un trou creux exposé, et un substrat en saphir est installé dans le trou creux, et une couche adhésive capable d'adhérer la coque métallique à la surface du dispositif électronique est prévue sur la face arrière du substrat en saphir.

EP2644670 décrit une feuille adhésive double face et un dispositif d'affichage pour un panneau tactile comprenant celle-ci. La feuille adhésive double face comprend une couche de résine transparente à base d'acrylique comme substrat.

Le but de la présente invention est de proposer un appareil mobile, maniable, portable et transportable par un utilisateur, parmi une montre-bracelet, un smartphone ou une tablette, et un appareil fixe, notamment parmi les bornes interactives, les horodateurs, les distributeurs automatiques, lesdits appareils mobiles et fixes comportant une glace ou un écran, et agencé pour assurer l'étanchéité et une protection anti-rayure d'un appareil destiné à afficher une information visible par un utilisateur à travers la glace ou l'écran, l'utilisateur étant capable de remplacer lui-même et sans outil des composants du dispositif.

Conformément à l'invention telle que définie dans la revendication 1 annexée, un appareil comporte une glace ou un écran, agencé pour assurer l'étanchéité et une protection anti-rayure dudit appareil destiné à afficher une information visible par un utilisateur à travers la glace ou l'écran. L'appareil comporte une première couche de matériau en polymère plastique transparent incassable, typiquement au moins cent voire deux cents fois plus résistants que le verre, la première couche de matériau étant agencée sur l'appareil de manière à ce qu'une première face soit agencée côté information et une seconde face côté utilisateur, la première couche de matériau étant fixée sur l'appareil de manière étanche. L'appareil comporte une seconde couche de matériau en verre transparent ayant une surface anti-rayure, notamment un verre saphir, superposée sur la première couche et constituant la partie externe de la glace ou l'écran de l'appareil, la seconde couche ayant une face externe agencée coté utilisateur et une seconde face interne agencée côté information. La seconde couche de matériau peut avoir la même forme et les mêmes dimensions que la première couche de matériau hormis son épaisseur. Toutefois, la seconde couche de matériau peut être plus petite que la première couche de matériau. La seconde couche de matériau en verre transparent comporte, portée par sa face interne, un film de colle repositionnable transparent, ce film de colle repositionnable assurant l'adhérence repositionnable de la seconde couche de matériau sur la première couche de matériau, tandis que la seconde couche de matériau avec son film de colle repositionnable peut être retirée pour pouvoir être remplacée par une autre seconde couche de matériau pourvue d'un film de colle repositionnable transparent, sans rompre l'étanchéité dudit appareil assuré par la première couche de matériau qui reste fixée à demeure sur ledit appareil. L'appareil comporte des moyens de positionnement pour faciliter le positionnement de la seconde couche de matériau sur la première couche de matériau, lesdits moyens de positionnement comporte une ou une série de protubérances agencées sur la périphérie du premier matériau de la manière à ce que ces moyens de positionnement entourent la seconde couche de matériau qui recouvre la première couche de matériau.

Des formes d'exécution préférées de l'invention sont définies dans les revendications dépendantes annexées.

Dans une forme d'exécution, l'appareil comporte des moyens d'étanchéité comportant une protubérance, un joint ou un collage agencé sur la périphérie externe du premier matériau.

Dans une forme d'exécution, l'étanchéité de l'appareil peut être assurée par un joint torique qui serait positionné entre l'appareil et la première couche de matériau ou par un collage à l'ultrason qui serait réalisé sur la première couche de matériau.

Dans une forme d'exécution préférentielle, la première couche de matériau, la seconde couche de matériau et le film de colle repositionnable, une fois empilés, ont une épaisseur comprise entre 0.8mm et 5mm, typiquement 2mm.

Dans une forme d'exécution, les moyens de positionnement comportent un cran formé dans la première couche de polymère incassable. Selon cette forme d'exécution, le cran constitue une protubérance périphérique externe de la première couche de matériau incassable.

Pour un meilleur confort visuel, la première couche matériau et/ou la seconde couche de matériau ont un traitement anti-reflet au rayonnement optique dans le domaine des longueurs d'onde visible.

Dans une forme d'exécution préférentielle, la première couche de matériau est un polycarbonate d'une épaisseur comprise entre 0.2mm et 2mm voire 3mm, typiquement 1mm. Le polycarbonate transparent est un matériau quasiment incassable. Par ailleurs, le polycarbonate transparent a une grande clarté et une bonne performance optique pour des applications où une bonne visibilité est importante notamment pour le domaine de l'horlogerie et des glaces de montre.

De préférence, la seconde couche de matériau est un verre saphir transparent d'une épaisseur comprise entre 0.2mm et 1mm voire 2mm, typiquement 0.55mm. Ce matériau est d'une consistance particulière et est réputé inrayable. On le retrouve également dans les glaces de montre pour des montres de haute qualité et ce matériau peut être rond ou de forme carré, rectangle, ovale, triangle, losange, ou toute autre forme.

Dans une exécution, la première couche de matériau et la seconde couche de matériau sont bombées en correspondance exacte l'une avec l'autre.

Un tel dispositif mobile permettant de cumuler l'aspect étanchéité et l'aspect inrayabilité peut être par exemple non seulement une montre-bracelet, un smartphone, une tablette voire tout autre appareil portatif semblable comportant un écran telle une console de jeu portable mais encore un appareil fixe, notamment une borne interactive, un horodateur ou un distributeur automatique comme par exemple un bancomat.

On choisit une colle repositionnable transparente de façon adaptée en ajustant ses propriétés mécaniques et pour qu'elle soit compatible avec le support sur lequel elle est enduite d'une part, et le support sur lequel elle est collé de manière repositionnable. De préférence, la colle repositionnable est déposée en sortie de fabrication de la glace de verre transparent, par exemple par pulvérisation et de manière homogène sur toute la surface de verre. Avantageusement, la colle est choisie parmi les colles permettant une prise quasi-instantanée en surface sur la glace de verre afin de pouvoir y superposer un intercalaire par exemple une feuille de papier adapté. Par exemple, la colle peut avoir été recouverte après un temps de séchage d'une pellicule de PTFE (polytétrafluoroéthylène) que l'utilisateur décolle avant le collage de la glace saphir sur la première couche de matériau.

Dans une variante, la colle appliquée à la surface interne de la seconde couche est sous forme de ruban adhésif double face avec un support polyester et un adhésif de surface très performant qui fournit une bonne adhésion sur les substrats à haute et basse énergie de surface. L'épaisseur de la colle repositionnable est comprise entre 80 microns et 250 microns en fonction du modèle choisi. Le ruban double face est bien entendu transparent. Par ailleurs, la colle a une très bonne résistance au cisaillement et au pelage. De préférence la colle a une force d'adhérence comprise entre 5N/cm et 50N/cm, typiquement 15N/cm côté interne de la deuxième couche contre la première couche.

Selon un autre aspect, le dispositif de l'invention comporte une couche en verre saphir transparent ayant une surface anti-rayure sur une première face, une seconde face opposée portant un film de colle repositionnable peut être fourni séparément du système. Ainsi, lorsque la couche en verre saphir, inrayable mais qui peut casser, se casse, un changement de la couche en verre saphir permet de reconstituer l'appareil mobile à « neuf » sans jamais avoir d'incidence sur l'étanchéité de l'appareil.

Selon cet autre aspect de l'invention, l'épaisseur de la couche en verre transparent du composant remplaçable, notamment en saphir, est comprise entre 0.2mm et 1mm voire 2 mm, de préférence 0.55mm.

Dans une forme d'exécution, un composant selon la présente invention comporte une couche en verre transparent, notamment en saphir, ayant une surface anti-rayure sur une première face, une seconde face opposée portant un film de colle repositionnable recouverte d'une feuille de protection enlevable.

De préférence, l'épaisseur de la couche en verre transparent, est comprise entre 0.2mm et 1mm voire 2mm, typiquement 0.55mm.

Dans une forme d'exécution, la couche en verre transparent est un verre transparent translucide teinté et/ou fumé et/ou, coloré et/ou cassé et/ou sérigraphié et/ou métallisé.

L'invention s'applique notamment aux montres-bracelets, smartphones, tablettes, bornes intéractives, console de jeu, table tactile ou bancomat.

Pour un aspect pratique, notamment pour les appareils mobile, maniable, portable et transportable par un utilisateur, un kit peut comporter un ou une pluralité de composants selon la présente invention, le kit comportant en outre un moyen de nettoyage de la première couche de matériau, notamment une lingette, et/ou une système d'extraction, notamment une ventouse, pour retirer le second matériau à remplacer.

Dans une variante, le kit comporte une pluralité de composants différents l'un de l'autre.

Ce composant est disponible à l'utilisateur soit lors de l'achat de l'appareil avec au moins une seconde couche de matériau de rechange de forme et dimensions choisies, recouverte d'un film de colle repositionnable avec une feuille de protection sur la partie collante, soit par achat parmi une collection de rechange disponible dans un lieu de vente.

Les caractéristiques de l'invention apparaitront plus clairement à la lecture de la description de plusieurs formes d'exécution données uniquement à titre d'exemple, nullement limitative en se référant aux figures schématiques, dans lesquelles :
- La figure 1 représente une vue en coupe d'un empilement de couche de matériaux selon la présente invention ;
- La figure 2 représente une vue en coupe d'un appareil comportant un écran ;
- La figure 3 représente une vue en perspective d'une montre bracelet dans laquelle une glace comportant une colle repositionnable est disposée pour être agencée sur une glace de la montre ;
- La figure 4 représente une vue en perspective d'un smartphone selon la présente invention ;
- Les figures 5A à 5E représentent des produits selon la présente invention ; et
- La figure 6 représente une vue partielle d'un appareil selon la présente invention comportant un dispositif de sécurité sous forme de coiffe.

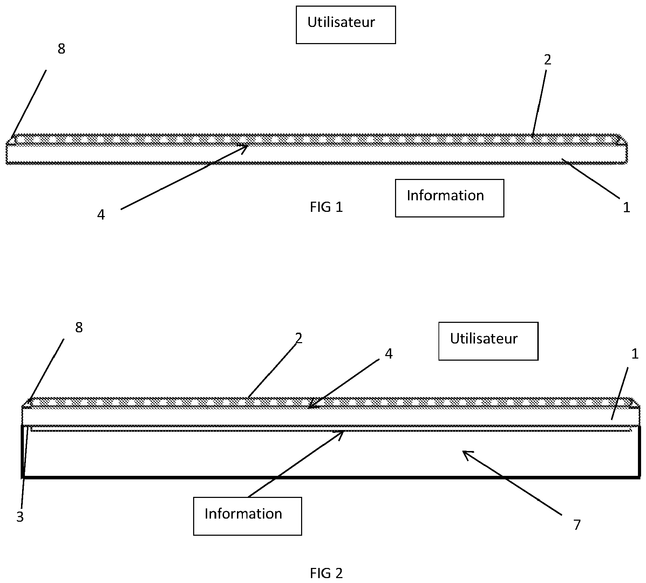

Comme illustré à la figure 1, un appareil mobile comporte une première couche 1 de polycarbonate transparent incassable, une seconde couche 2 en verre saphir transparent ayant un traitement anti-rayure, superposée sur la première couche 1, la seconde couche 2 ayant une face externe agencée coté utilisateur et une seconde face interne agencée côté information. L'appareil comporte des moyens de positionnement pour faciliter le positionnement de la seconde couche de matériau (2) sur la première couche de matériau (1), sous forme d'un cran comportant une protubérance 8 agencée sur la périphérie externe de la première couche 1 de polycarbonate de manière à ce que ces moyens de positionnement entourent la seconde couche 2 de verre saphir qui recouvre la première couche 1 de polycarbonate. Un film de colle repositionnable 4 est déposé sur la face interne de la couche de verre saphir 2 transparent de manière à ce que la couche de verre saphir 2 avec la colle repositionnable 4 puissent être retirées sans rompre l'étanchéité dudit appareil et remplacer par une nouvelle couche de verre saphir 2 avec colle repositionnable 4, cette nouvelle couche étant à disposition de l'utilisateur.

Un exemple de colle repositionnable transparente est la colle référence 9088FL de la maison 3M. En règle générale, la colle repositionnable devrait avoir une épaisseur de quelques dizaines à quelques centaines de microns, par exemple de 100 microns à 200 microns. Le film de colle repositionnable 4 est enduit sur la deuxième couche 2 car c'est la couche qui est destinée à être retirée au besoin, et cela permet notamment de d'éviter que la première couche 1 qui reste à demeure sur l'appareil doit être nettoyé avant chaque collage de la deuxième couche sur la première couche. Au contraire de l'invention, en mettant la colle sur la surface externe de la première couche 1, la couche de colle serait soumise à la poussière et au bout de quelques utilisations, la seconde couche 2 ne serait plus suffisamment bien fixée sur la première couche 1.

Comme illustré à la figure 2, le dispositif mobile de la présente invention est agencé pour s'incorporer dans un appareil 7 sans dénaturer l'objet. Le dispositif selon l'invention vient en lieu et place d'un écran ou d'une glace conventionnels. L'appareil 7 comprend des moyens d'étanchéité 3 par exemple sous forme d'un soudage de l'extrémité périphérique de la première couche 1 sur la périphérie externe de l'appareil 7. Des moyens de positionnement 8 entourent et guident la seconde couche de matériau 2 qui recouvre la première couche 1 de matériau. Un film de colle 4 repositionnable transparente est déposée sur la face interne de la seconde couche 2 de matériau en verre transparent, de manière à ce que la seconde couche de matériau avec la colle repositionnable puisse être retirée sans rompre l'étanchéité dudit appareil 7 et remplacée par une nouvelle couche de verre saphir 2 avec colle repositionnable 4 à disposition de l'utilisateur.

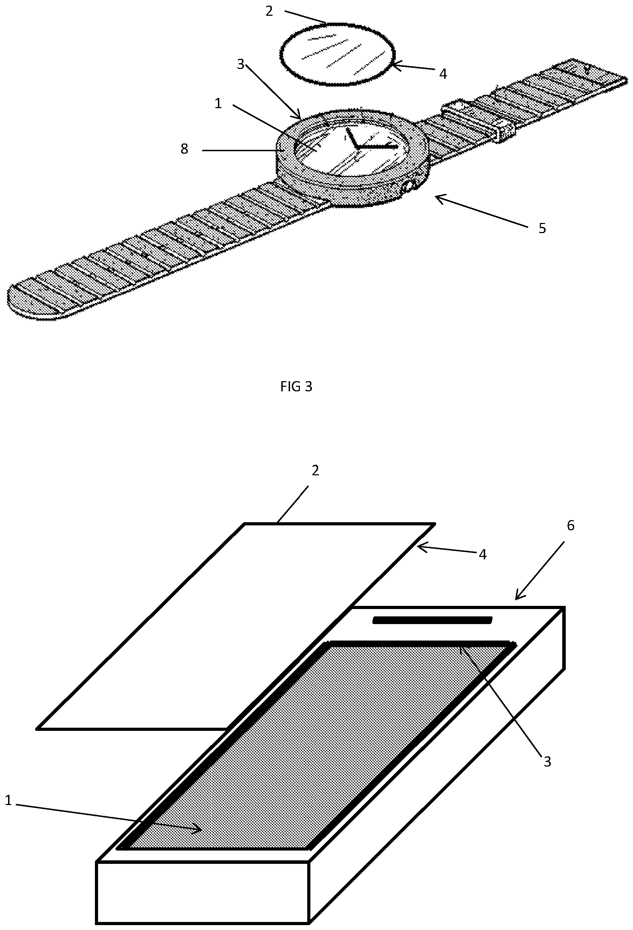

L'exemple illustré à la figure 3 est une montre-bracelet 5. Le dispositif de la présente invention permet d'assurer l'étanchéité et une protection anti-rayure de la montre-bracelet 5 destinée à afficher notamment l'heure à travers la glace. Dans cet exemple, le dispositif de la présente invention comporte une première couche 1 de matériau en polycarbonate transparent incassable. La couche de polycarbonate 1 est fixée sur la montre-bracelet 5 de manière étanche par des moyens d'étanchéité 3, notamment un joint torique, de manière à ce qu'une première face soit agencée côté cadran de la montre-bracelet 5 et une seconde face côté utilisateur. Le polycarbonate est une matière très utilisée dans le domaine horloger notamment pour sa robustesse et ce, malgré sa sensibilité aux rayures. Une seconde couche 2 en verre saphir transparent ayant une surface anti-rayure est prête à être agencée sur la couche de polycarbonate 1 montée sur la montre-bracelet 5. La couche en verre saphir transparent 2 porte un film de colle repositionnable 4 appliquée sur la face interne de ladite couche de verre saphir transparent 2. Ainsi, la couche de verre saphir 2 avec son film de colle repositionnable 4 peut être superposée sur la première couche de polycarbonate 1 fixée sur la montre-bracelet 5 et si besoin, par exemple en cas de casse de la couche de verre saphir 2, ladite couche de verre saphir 2 avec son film de colle 4 peut être retirée sans rompre l'étanchéité de la montre-bracelet 5. Une lunette de montre 8 offre un moyen de positionnement de la glace saphir 2, la lunette de montre étant agencée sur la périphérie externe du polycarbonate 1 de manière à ce que des moyens d'étanchéité 3 entourent la couche de polycarbonate 1 et ne soient jamais rompus en cas de changement de la glace saphir 2.

Dans une variante non illustrée, le verre saphir est contenu dans un cran de glace, logement creusé soit dans la lunette du boîtier, soit directement dans sa carrure.

L'empilement des couches de polycarbonate, verre saphir et de la colle repositionnable représentent, par exemple, une épaisseur de 1.6mm. Le polycarbonate a une épaisseur de 1mm et le verre saphir une épaisseur de 0.55mm.

Dans l'univers des smartphones, l'écran est de loin l'élément qui casse le plus fréquemment même s'il s'agit d'un verre renforcé. Le saphir est plus robuste et plus résistant aux rayures que le verre.

Comme illustré à la figure 4, un smartphone 6 comporte un écran tactile. Cet écran tactile est composé d'une première couche 1 de matériau en polymère plastique transparent incassable, la première couche 1 de matériau étant fixée sur ledit smartphone 6 de manière étanche et de manière à ce qu'une première face soit agencée côté information et une seconde face côté utilisateur. Une seconde couche de matériau 2 en verre saphir transparent ayant une surface anti-rayure, est prête à être superposée sur la première couche 1 grâce à un film de colle repositionnable 4 transparente portée par la face interne de la couche de verre saphir transparent 2.

Dans cet exemple, la colle repositionnable est compatible avec le support sur lequel elle est enduite d'une part, ici un verre saphir, et le support sur lequel elle est collée de manière repositionnable, ici un polycarbonate.

Selon la figure 4, un cran 3 dans la boite du smartphone 6 constitue une protubérance périphérique externe de la première couche de matériau incassable.

Dans cet exemple, la première couche de matériau 1 et la seconde couche de matériau 2 ont un traitement anti-reflet au rayonnement optique dans le domaine des longueurs d'onde visible. La seconde couche de matériau 2 est un oxyde d'aluminium substantiellement monocristallin, plus précisément un saphir synthétique ayant une surface anti-rayure sur une première face, une seconde face opposée comportant un film de colle repositionnable 4.

Selon la présente invention, la création d'un sandwich comportant une couche en polycarbonate, une couche en saphir synthétique avec un liant invisible repositionnable portée par la couche en saphir permet de ne jamais impacter l'étanchéité de l'appareil en cas de casse de la couche en verre saphir. Ainsi, la couche de verre saphir cassée ou endommagée peut être retirée avec son film en liant repositionnable, l'appareil restant fonctionnel et étanche jusqu'à la mise en place d'une nouvelle couche de verre saphir repositionnable avec un film de liant repositionnable. Ainsi, nous obtenons un état de surface inrayable, et en cas de choc de la glace, la couche en polycarbonate ne se brise pas et protège donc l'intérieur de l'appareil contre les poussières et l'humidité en attendant un remplacement pour la couche de verre saphir brisée.

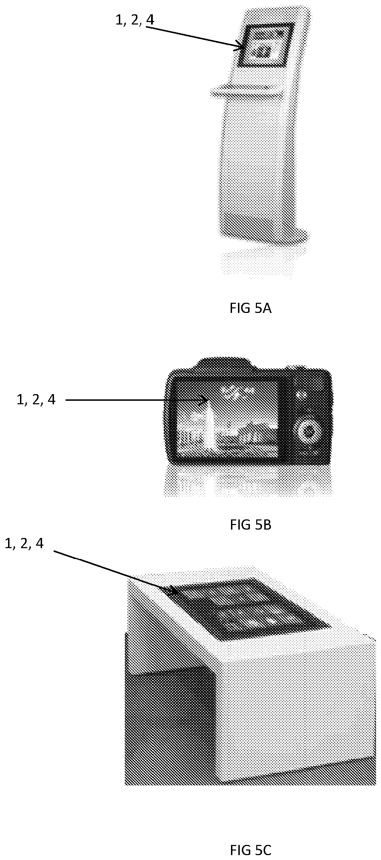

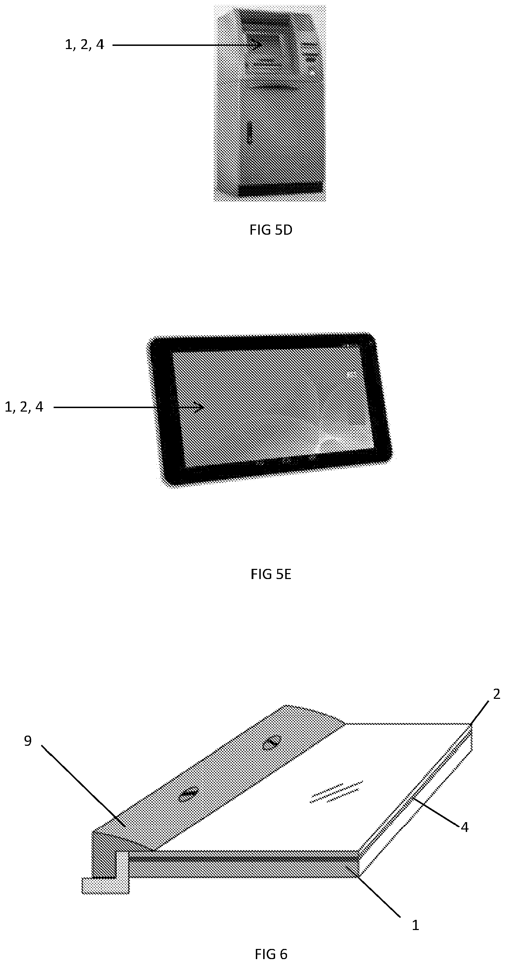

Comme illustré aux figures 5A à 5E, le système «sandwich » selon l'invention décrite ci-dessus peut être utilisé dans de nombreuses applications. Par exemple, à la figure 5A, le système est intégré dans une borne interactive et à la figure 5B le système est intégré dans un appareil photo. A la figure 5C, le système est intégré sur une table tactile et sur la figure 5D le système est intégré sur un bancomat. Enfin à la figure 5E, le système est intégré sur une tablette. Dans chacun de ces appareils, une première couche 1 est fixée à demeure sur ledit appareil alors qu'une seconde couche 2 avec son film de colle repositionnable 4 est posée par-dessus.

Concernant les appareils mobiles, maniables, portables et transportables par un utilisateur tels les montres-bracelets, les smartphones, les tablettes, les appareils photos ou les consoles de jeux, la couche de verre saphir cassée peut être retirée par l'utilisateur lui-même.

En ce qui concerne les appareils à usage partagé, notamment les horodateurs, les bancomats ou les bornes interactives, un dispositif de sécurité peut être intégré pour éviter que la couche de verre saphir, cassée ou pas, soit retirée par une personne non autorisée. Ce dispositif de sécurité consiste par exemple en une coiffe 9 (figure 6) entourant toute ou partie de la surface périphérique du verre saphir. Ainsi, la personne habilitée devrait d'abord avoir le matériel adéquat, telle une clé, ou une vis personnalisée pour retirer la coiffe 9 afin de pouvoir intervenir sur la couche de verre saphir 2.

## Revendications

1. Appareil comportant une glace ou un écran dans lequel la glace ou l'écran est agencé pour assurer l'étanchéité et une protection anti-rayure dudit appareil qui est destiné à afficher une information visible par un utilisateur à travers la glace ou l'écran, ledit appareil comportant :
- une première couche de matériau (1) en polymère plastique transparent incassable, la première couche de matériau (1) étant agencée sur ledit appareil de manière à ce qu'une première face soit agencée côté information et une seconde face côté utilisateur, la première couche de matériau étant fixée sur l'appareil de manière étanche,
- une seconde couche de matériau (2) en verre transparent ayant une surface anti-rayure, notamment un verre saphir, superposée sur la première couche (1) et constituant la partie externe de la glace ou l'écran de l'appareil, la seconde couche (2) ayant une face externe agencée coté utilisateur et une face interne agencée côté information, et dans lequel la seconde couche de matériau (2) en verre transparent comporte, portée par sa face interne, un film de colle repositionnable (4) transparent, ce film de colle repositionnable (4) assurant l'adhérence repositionnable de la seconde couche de matériau (2) sur la première couche de matériau (1), tandis que la seconde couche de matériau (2) avec son film de colle repositionnable (4) peut être retirée pour pouvoir être remplacée par une autre seconde couche de matériau (2) pourvu d'un film de colle repositionnable (4) transparent, sans rompre l'étanchéité dudit appareil assuré par la première couche de matériau (1) qui reste fixée à demeure sur ledit appareil, l'appareil comportant également des moyens de positionnement (8) pour faciliter le positionnement de la seconde couche de matériau (2) sur la première couche de matériau (1), lesdits moyens de positionnement (8) comportant une ou une série de protubérances, agencées sur la périphérie du premier matériau (1) de manière à ce que ces moyens de positionnement (8) entourent la seconde couche de matériau (2) qui recouvre la première couche de matériau (1).

2. Appareil selon la revendication 1, comportant des moyens d'étanchéité (3) comportant une protubérance, un joint ou un collage agencé sur la périphérie externe ou interne du premier matériau (1).

3. Appareil selon l'une des revendications 1 ou 2, dans lequel la première couche de matériau (1), la seconde couche de matériau (2) et le film de colle repositionnable (4), une fois empilés, ont une épaisseur comprise entre 0.8mm et 5mm, typiquement 2mm.

4. Appareil selon l'une des revendications précédentes, dans lequel les moyens de positionnement (8) comportent un cran formé dans la première couche (1) de matériau, dans une protubérance périphérique externe de la première couche (1) de matériau.

5. Appareil selon l'une des revendications précédentes, dans lequel la première couche de matériau (1) et/ou la seconde couche de matériau (2) ont un traitement antireflet au rayonnement optique dans le domaine des longueurs d'onde visible.

6. Appareil selon l'une des revendications précédentes, dans lequel la première couche de matériau (1) est un polycarbonate ou une matière acrylique d'une épaisseur comprise entre 0.2mm et 2mm, typiquement 1mm.

7. Appareil selon l'une des revendications précédentes, dans lequel la seconde couche de matériau (2) est un verre saphir d'une épaisseur comprise entre 0.2mm et 1mm, typiquement 0.5 à 0.6mm.

8. Appareil selon l'une des revendications précédentes, dans lequel la première couche de matériau (1) et la seconde couche de matériau (2) sont bombées en correspondance exacte l'une avec l'autre.

9. Appareil selon la revendication 8 comportant un écran.

10. Montre-bracelet étant un appareil selon l'une des revendications 1 à 8.

11. Smartphone étant un appareil selon l'une des revendications 1 à 8.

12. Tablette, borne interactive, appareil photo, console de jeu, bancomat ou table tactile étant des appareils selon l'une des revendications 1 à 8.

13. Ensemble comportant un appareil selon l'une des revendications 1 à 12 et au moins un composant remplaçable, le composant remplaçable comportant une couche (2) en verre transparent, notamment en saphir, ayant une surface anti-rayure sur une première face, une seconde face opposée portant un film de colle repositionnable (4) recouverte d'une feuille de protection.

14. Ensemble selon la revendication 13, dans lequel la couche (2) en verre transparent du composant remplaçable est en saphir.

15. Ensemble selon l'une des revendications 13 ou 14, dont l'épaisseur de la couche (2) en verre transparent du composant remplaçable, est comprise entre 0.2mm et 1mm, typiquement 0.5 à 0.6mm.

16. Ensemble selon l'une des revendications 13 à 15, dans lequel la couche (2) en verre transparent du composant remplaçable est un verre transparent translucide teinté et/ou fumé et/ou, coloré et/ou cassé et/ou sérigraphié et/ou métallisé.

17. Ensemble selon l'une des revendications 13 à 16comportant un kit d'une pluralité de composants remplaçables, le kit comportant en outre un moyen de nettoyage de la première couche de matériau (1), notamment une lingette, et/ou un système d'extraction, notamment une ventouse, pour retirer le second matériau (2) à remplacer.

18. Ensemble selon l'une des revendications 13 à 17 comportant une pluralité de composants remplaçables dont une pluralité de composants remplaçables sont différents l'un de l'autre.

## Patentansprüche

1. Vorrichtung mit einer Scheibe oder einem Bildschirm, wobei die Scheibe oder der Bildschirm so angeordnet ist, dass sie bzw. er für die Dichtigkeit und einen Kratzschutz der Vorrichtung sorgt, die dafür bestimmt ist, einem Benutzer durch die Scheibe oder den Bildschirm hindurch eine sichtbare Information anzuzeigen, wobei die Vorrichtung Folgendes aufweist:
- eine erste Materialschicht (1) aus durchsichtigem bruchfestem plastischem Polymer, wobei die erste Materialschicht (1) derart auf der Vorrichtung angeordnet ist, dass eine erste Fläche auf der Informationsseite und eine zweite Fläche auf der Benutzerseite angeordnet ist, wobei die erste Materialschicht dicht auf der Vorrichtung befestigt ist,
- eine zweite Materialschicht (2) aus durchsichtigem Glas mit einer kratzfesten Oberfläche, insbesondere einem Saphirglas, die auf der ersten Schicht (1) liegt und den Außenteil der Scheibe oder des Bildschirms der Vorrichtung bildet, wobei die zweite Schicht (2) eine Außenfläche, die auf der Benutzerseite angeordnet ist, und eine Innenfläche aufweist, die auf der Informationsseite angeordnet ist,
und in dem das zweite Materialschicht (2) aus durchsichtigem Glas auf ihrer Innenfläche einen durchsichtigen repositionierbaren Klebstofffilm (4) beinhaltet, wobei dieser repositionierbare Klebstofffilm (4) dafür sorgt, dass die zweite Materialschicht (2) repositionierbar an der ersten Materialschicht (1) haftet, während die zweite Materialschicht (2) mit ihrem repositionierbaren Klebstofffilm (4) abgenommen werden kann, damit sie durch eine andere zweite Materialschicht (2) ersetzt werden kann, die mit einem durchsichtigen repositionierbaren Klebstofffilm (4) versehen ist, ohne die Dichtigkeit der Vorrichtung zu beeinträchtigen, für die die erste Materialschicht (1) sorgt, die dauerhaft an der Vorrichtung befestigt bleibt,
wobei die Vorrichtung umfasst auch Positionierungsmittel (8) zum Vereinfachen der Positionierung der zweiten Materialschicht (2) auf der ersten Materialschicht (1), wobei die Positionierungsmittel (8) eine Vorwölbung oder eine Reihe von Vorwölbungen aufweisen, die derart am Rand des ersten Materials (1) angeordnet sind, dass diese Positionierungsmittel (8) die zweite Materialschicht (2) umgeben, die die erste Materialschicht (1) abdeckt.

2. Vorrichtung nach Anspruch 1, die Dichtigkeitsmittel (3) aufweist, die eine Vorwölbung, eine Dichtung oder eine Verklebung aufweisen, die am Außen- oder Innenrand des ersten Materials (1) angeordnet ist.

3. Vorrichtung nach Anspruch 1 oder 2, wobei die erste Materialschicht (1), die zweite Materialschicht (2) und der repositionierbare Klebstofffilm (4), sobald sie übereinander geschichtet sind, eine Dicke zwischen 0,8 mm und 5 mm, typischerweise 2 mm aufweisen.

4. Vorrichtung nach einem der vorhergehenden Ansprüche, wobei die Positionierungsmittel (8) eine Kerbe aufweisen, die in der ersten Materialschicht (1) ausgebildet ist.
in einer äußeren Randvorwölbung der ersten Materialschicht (1).

5. Vorrichtung nach einem der vorhergehenden Ansprüche, wobei die erste Materialschicht (1) und/oder die zweite Materialschicht (2) eine Antireflexbehandlung für optische Strahlung im sichtbaren Wellenlängenbereich aufweist.

6. Vorrichtung nach einem der vorhergehenden Ansprüche, wobei die erste Materialschicht (1) ein Polycarbonat oder ein Acrylwerkstoff mit einer Dicke zwischen 0,2 mm und 2 mm, typischerweise 1 mm ist.

7. Vorrichtung nach einem der vorhergehenden Ansprüche, wobei die zweite Materialschicht (2) ein Saphirglas mit einer Dicke zwischen 0,2 mm und 1 mm, typischerweise von 0,5 bis 0,6 mm ist.

8. Vorrichtung nach einem der vorhergehenden Ansprüche, wobei die erste Materialschicht (1) und die zweite Materialschicht (2) einander genau entsprechend gewölbt sind.

9. Vorrichtung nach Anspruch 8, die einen Bildschirm aufweist.

10. Armbanduhr nach einem der Ansprüche 1 bis 8.

11. Smartphone das ist ein Vorichtung nach einem der Ansprüche 1 bis 8.

12. Tablet, Dialogstation, Kamera, Spielekonsole, Bankautomat oder Touch-Tisch die Vorrichtung nach einem der Ansprüche 1 bis 8 sind.

13. Set mit einem Vorrichtung nach einem der Ansprüche 1 bis 12 und austauschbare Komponente bzw. austauschbare Komponenten, wobei die austauschbare Komponente eine Schicht (2) aus durchsichtigem Glas, insbesondere aus Saphir, mit einer kratzfesten Oberfläche auf einer ersten Fläche aufweist, wobei eine gegenüberliegende Fläche einen repositionierbaren Klebstofffilm (4) trägt, der mit einer Schutzfolie bedeckt ist.

14. Set nach Anspruch 13, wobei die Schicht (2) aus durchsichtigem Glas der austauschbaren Komponente aus Saphir ist.

15. Set nach Anspruch 13 oder 14, wobei die Dicke der Schicht (2) aus durchsichtigem Glas der austauschbaren Komponente zwischen 0,2 mm und 1 mm, typischerweise von 0,5 bis 0,6 mm beträgt.

16. Set nach einem der Ansprüche 13 bis 15, wobei die Schicht (2) aus durchsichtigem Glas der austauschbaren Komponente ein durchscheinendes durchsichtiges getöntes Glas und/oder Rauchglas und/oder gefärbtes und/oder Bruchglas und/oder per Siebdruck bedrucktes und/oder metallisiertes Glas ist.

17. Set nach einem der Ansprüche 13 bis 16, die einen Satz aus einer Vielzahl von austauschbaren Komponenten aufweist, wobei der Satz ferner ein Reinigungsmittel für die erste Materialschicht (1), insbesondere ein Reinigungstuch, und/oder ein Entnahmesystem, insbesondere einen Sauger, zum Abnehmen des auszutauschenden zweiten Materials (2) aufweist.

18. Set nach einem der Ansprüche 13 bis 17, die eine Vielzahl von austauschbaren Komponenten aufweist, wobei sich eine Vielzahl von austauschbaren Komponenten voneinander unterscheidet.

## Claims

1. An apparatus including a crystal or a screen wherein the crystal or the screen is arranged to ensure sealing and an anti-scratch protection of said apparatus which is intended to display an information visible to a user through the crystal or the screen, said apparatus including:
- a first material layer (1) made of an unbreakable transparent plastic polymer, the first material layer (1) being arranged on said apparatus so that a first face is arranged on the information side and a second face on the user side, the first material layer being fastened on the apparatus in a tight manner,
- a second material layer (2) made of a transparent glass having an anti-scratch surface, in particular a sapphire glass, superimposed on the first layer (1) and constituting the outer portion of the crystal or the screen of the apparatus, the second layer having an outer face arranged on the user side and an inner face arranged on the information side,
and in which the second material layer (2) made of a transparent glass includes, carried by its inner face, a transparent repositionable glue film (4), this repositionable glue film (4) ensuring the repositionable adherence of the second material layer (2) on the first material layer (1), whereas the second material layer (2) with its repositionable glue film (4) can be removed so as to be able to be replaced by another second material layer (2) provided with a transparent repositionable glue film (4), without breaking the sealing of said apparatus ensured by the first material layer (1) which remains permanently fastened on said apparatus,
The apparatus also including positioning means (8) for facilitating the positioning of the second material layer (2) on the first material layer (1), said positioning means (8) including a protrusion or a groove, arranged on the outer or inner periphery of the first material (1) so that these positioning means (8) surround all or part of the second material layer (2) which covers the first material layer (1).

2. The apparatus according to claim 1, including sealing means (3) including a protrusion, a gasket or a gluing arranged on the outer or inner periphery of the first material (1).

3. The apparatus according to claim 1 or 2, wherein the first material layer (1), the second material layer (2) and the repositionable glue film (4), once stacked, have a thickness comprised between 0.8 mm and 5 mm, typically 2 mm.

4. The apparatus according to any of the preceding claims, wherein the positioning means (8) include a notch formed in the first material layer (1) in an outer peripheral protrusion of the first material layer (1).

5. The apparatus according to any of the preceding claims, wherein the first material layer (1) and/or the second material layer (2) have an anti-reflective treatment to optical radiation in the visible wavelength range.

6. The apparatus according to any of the preceding claims, wherein the first material layer (1) is a polycarbonate or an acrylic material with a thickness comprised between 0.2 mm and 2 mm, typically 1 mm.

7. The apparatus according to any of the preceding claims, wherein the second material layer (2) is a sapphire glass with a thickness comprised between 0.2 mm and 1 mm, typically 0.5 to 0.6 mm.

8. The apparatus according to any of the preceding claims, wherein the first material layer (1) and the second material layer (2) are cambered in exact correspondence with each other.

9. The apparatus according to claim 8, including a screen.

10. A wristwatch that is an apparatus according to any of claims 1 to 8.

11. A smartphone that is an apparatus according to any of claims 1 to 8.

12. A tablet, an interactive terminal, a camera, a game console, an automated teller machine or a touch table that are apparatus according to any of claims 1 to 8.

13. A set including an apparatus according to any of claims 1 to 12 and at least one removable component, the removable compenant including a layer (2) made of a transparent glass, in particular of sapphire, having an anti-scratch surface on a first face, an opposite second face carrying a repositionable glue film (4) covered with a protective sheet.

14. A set according to claim 13, wherein the transparent glass layer (2) of the removable component is made of sapphire.

15. A set according to any of claims 13 or 14, wherein the thickness of the transparent glass layer (2) of the removable component, is comprised between 0.2 mm and 1 mm, typically 0.5 to 0.6 mm.

16. A set according to any of claims 13 to 15, wherein the transparent glass layer (2) of the removable component is a tinted and/or smoked and/or colored and/or broken and/or screen-printed and/or metallized translucent transparent glass.

17. A set according to any of claims 13 to 16, including a kit comprising a plurality of removable component, said kit further comprising means for cleaning the first material layer (1), in particular a wipe, and/or an extraction system, in particular a suction cup, for removing the second material (2) to be replaced.

18. A set according to any of claims 13 to 17, comprising a plurality of removable component including a plurality of removable components different from each other.
